# EUROPEAN PATENT SPECIFICATION

(11) **EP 4 522 827 B1**
(45) Date of publication and mention of the grant of the patent: **01.07.2026**
(21) Application number: 23725408.1
(22) Date of filing: 11.05.2023
(51) Int. Cl.: E04F 21/00

(54) **DEVICE AND METHOD FOR PERIMETER REPLICATION**
VORRICHTUNG UND VERFAHREN FÜR PERIMETERREPLIKATION
DISPOSITIF ET MÉTHODE DE RÉPLICATION DE PÉRIMÈTRE

(30) Priority: 12.05.2022 GB 202206953
(43) Date of publication of application: 19.03.2025
(73) Proprietor: JAC Enterprise Ltd, Silsoe Bedford MK45 4EP (GB)
(72) Inventor: HUTCHINSON, Anthony, Silsoe Bedford MK45 4EP (GB); HUTCHINSON, Jack, Silsoe Bedford MK45 4EP (GB)
(74) Representative: Murgitroyd & Company
(86) International application number: PCT/GB2023/051239
(87) International publication number: WO 2023/218198

(56) References cited:
- US-A- 2 867 911
- US-B1- 6 553 683

## Description

### Field of the Invention

The present invention relates to a perimeter replication device for use in construction, for example for a door frame, a window frame and the like, and to a perimeter replication method for replicating the perimeter of an aperture in construction.

### Background to the Invention

Significant labour and time can be required by individuals, such as contractors and trades persons, when fitting a door to a door frame. A known method involves taking a number of measurements of the door frame to ensure the blank door selected fits within the frame. Measurements of the door frame are often taken multiple times and averaged to reduce errors. However, such a method leads to inaccuracies and may not capture any irregularities in the door frame, such as the angle or tilt of the frame.

Alternatively, a blank door is selected as the 'closest fit' to the door frame. In these cases, the door is not bespoke to the door frame. The user may then perform an additional step of cutting the blank door down to size. Such a process may take multiple iterations of checking and cutting, requiring further time and labour.

In addition, a gap between the door and door frame is required to allow a clearance fit, and so the gap must not be too small. Additionally, if the gap is too large then the door will not adequately block noise or drafts from entering the room. Such a gap must be measured by hand, which can be challenging when measuring old or misshapen door frames, wherein the perimeter is not straight across the length.

Similar concerns apply to other apertures in construction, such as windows.

Objects and aspects of the present claimed invention seek to alleviate at least these problems with the prior art.

US 6 553 683 B1 relates to a method and apparatus for generating a template for applications in, the glass, mirror, marble and countertop cutting, fitting and installation industries. Said document discloses a device according to the preamble of claim 1.

### Summary of the invention

According to a first aspect of the invention, there is provided a perimeter replication device for use in construction comprising: an adjustable frame comprising: a plurality of elongate members; and a plurality of hinges connected to the plurality of elongate members. Each elongate member of the plurality of elongate members is connected at a first end to a first hinge of the plurality of hinges and at a second end to a second hinge of the plurality of hinges such that the adjustable frame is a continuous structure. Each elongate member of the plurality of elongate members is telescopic and the perimeter replication device further comprises a locking unit configured to lock the adjustable frame in a locked configuration, the locking unit comprising an elongate member locking mechanism, configured to lock each elongate member of the plurality of elongate members in any position between a telescopically unextended configuration and a maximum telescopically extended configuration, and a hinge locking mechanism, configured to lock each hinge of said plurality of hinges in any position between a minimum position and a maximum position The adjustable frame further comprises a spacer unit located on a perimeter opposing face of the adjustable frame. The spacer unit comprises a plurality of spacer members located on the plurality of hinges.

In this way, a device to replicate the perimeter of an aperture frame, such as a door frame, a window frame or the like, is provided. The device allows a user to replicate the perimeter of the frame, providing a stencil from which the user can cut e.g. a corresponding shaped door. The user can adjust the adjustable frame and then lock the adjustable frame in the adjusted position, such that the device forms a wide array of stencil shapes and dimensions. The elongate member locking mechanism and the hinge locking mechanism can be locked and unlocked independently of one another such that the device can be used by a user working alone. Thereafter, referring to an example of the door, the user may fit hinges to the cut-out door and hang the door on the frame. As such, a simplified device to assist in measuring and fitting a door to a door frame is provided. A perimeter of another aperture than door may be replicated in a similar manner.

Here below, the invention is described with reference to a door frame, but it is to be understood that other applications than a door frame (such as a window frame and the like) are possible.

In some embodiments, the plurality of elongate members consists of three elongate members. In some embodiments, the plurality of elongate members consists of four elongate members. In some embodiments, the plurality of elongate members consists of five elongate members. In further embodiments, the plurality of elongate members comprises at least five elongate members. It is understood that the number of elongate members is selected to best fit the application of the perimeter measuring device, namely an elongate member is provided for each side of the perimeter to be replicated.

Preferably, the adjustable frame is a quadrilateral comprising a first longitudinal member opposing a second longitudinal member and a first lateral member opposing a second lateral member. Preferably, the first longitudinal member and second longitudinal member are substantially identical and the first lateral member and second lateral member are substantially identical.

In some embodiments, every elongate member is substantially the same length. Preferably, the first longitudinal member and second longitudinal member are at least 1.5 times the length of the first lateral member and second lateral member. More preferably, the first longitudinal member and second longitudinal member are at least double the length of the first lateral member and second lateral member. In this way, a substantially rectangular frame is provided.

Preferably, the length of the first longitudinal member and second longitudinal member are from 1500mm to 2500 mm when in a maximum telescopically extended configuration. More preferably, the length of the first longitudinal member and second longitudinal member are from 2000 mm to 2200 mm when in a maximum telescopically extended configuration.

Preferably, the length of the first longitudinal member and second longitudinal member are from 1000 mm to 2000 mm when in an unextended configuration. More preferably, the length of the first longitudinal member and second longitudinal member are from 1400 mm to 1600 mm when in an unextended configuration.

Preferably, the length of the first lateral member and second lateral member are from 500 mm to 1300 mm when in a maximum telescopically extended configuration. More preferably, the length of the first lateral member and second lateral member are from 800 mm to 1000 mm when in a maximum telescopically extended configuration.

Preferably, the length of the first lateral member and second lateral member are from 400mm to 800 mm when in an unextended configuration. More preferably, the length of the first lateral member and second lateral member are from 500 mm to 700 mm when in an unextended configuration.

Preferably, the plurality of elongate members are substantially straight. In select embodiments, one or more of the plurality of elongate members are substantially curved. Preferably, the plurality of elongate members are independently telescopic. In this way, the user can adjust the length of each elongate member independently of each other elongate member.

Preferably, each elongate member of the plurality of elongate members comprises an external member and an internal member, at least a portion of the internal member located within the external member, the internal member configured to extend from the external member when the elongate member is in a telescopically extended configuration. In this way, in an unextended configuration, the majority of the internal member is housed within the external member, and therefore not accessible to the user's fingers. A safer perimeter replication member is provided as a number of the moving parts are located internally.

In some embodiments, each elongate member comprises a second internal member, at least a portion of the second internal member located within a first internal member, the second internal member configured to extend from the first internal member when the elongate member is in a telescopically extended configuration. Preferably, each elongate member comprises only a first internal member and an external member. In this way, the length of only one internal member relative to the external member requires adjustment when fitting the device to the perimeter of a frame.

The elongate member locking mechanism is configured to lock each elongate member of the plurality of elongate members in substantially every position between an unextended configuration and a telescopically extended configuration. In this way, the length of each elongate member can be adjusted to more accurately and precisely match the perimeter of the frame. Preferably, the elongate member locking mechanism comprises a frictional blocking member located on the external member, the frictional blocking member configured to removably retain the internal member in a position relative to the external member. Preferably, the frictional blocking member is located at a first end of the external member, the internal member being telescopically extendable from the first end. Preferably, the frictional blocking member comprises a handle configured for user actuation of the frictional blocking member. In this way, the user can adjust the length of each elongate member before removably retaining each elongate member in a locked configuration at the desired length.

Alternatively, the elongate member locking mechanism is configured to lock each elongate member of the plurality of elongate members in a plurality of discrete locked configurations.

Preferably, at least one elongate member of the plurality of elongate members comprises a plurality of apertures located at discrete locations on the elongate member and the elongate member locking mechanism comprises a blocking member, the blocking member configured to be housed within an aperture of the plurality of apertures to block motion of the elongate member relative to the elongate member locking mechanism. More preferably, each elongate member of the plurality of elongate members comprises a plurality of apertures located at discrete locations on the elongate member. Preferably, a blocking member is located on the external member. Preferably, the distance between each aperture of the plurality of apertures is from 20mm to 50mm.

Preferably, the hinge locking mechanism comprises a handle configured for user actuation of the hinge locking mechanism. Preferably, the handle comprises an external tool cooperating portion for cooperating with an external tool. For example, a wrench can be used to lock and unlock the hinge locking mechanism. In some embodiments, the external tool cooperating portion comprises a hexagonal member configured to be turned by a wrench. Alternatively, the external tool cooperating portion comprises a screw. In this way, a screwdriver can be used to lock and unlock the hinge mechanism. Alternatively, the external tool cooperating portion comprises an aperture. In this way, a corresponding key, such as a hex key or Allen key, can be used to lock and unlock each hinge mechanism. In select embodiments, the handle is hand operated. In this way, the user can lock and unlock the hinge mechanism using only their hands, without the need for external tools. Therefore, the user can adjust the angle made between each adjacent elongate member before removably locking each hinge at the desired angle. As such, each hinge can be locked in turn, such that the device can be used by a user working alone.

The adjustable frame further comprises a spacer unit located on a perimeter opposing face of the adjustable frame. It is understood that the perimeter opposing faces are the faces of the frame located closest to, or substantially abutting, the door frame during use.

The spacer unit comprises a plurality of spacer members located on the plurality of hinges. Preferably, each hinge of the plurality of hinges comprises two spacer members. Preferably, the height of each spacer member of the plurality of spacer members is between 1mm and 5mm. More preferably, the height of each spacer member of the plurality of spacer members is between 1.5mm and 3mm. Still more preferably, the height of each spacer member of the plurality of spacer members is approximately 2mm.

Preferably, each elongate member of the plurality of elongate members has a rectangular cross section. Preferably, a perimeter opposing face of each hinge of said plurality of hinges comprises a curved portion. It is understood that the perimeter opposing faces are the faces of the frame located closest to, or substantially abutting, the door frame during use. In this way, when the perimeter of the frame to be replicated has uneven corners, the adjustable frame better fits within the perimeter of the frame.

Preferably, the configuration of each elongate member of the plurality of elongate members is identical. Alternatively, the configuration of the first longitudinal member and second longitudinal member is identical and the configuration of the first lateral member and second lateral member is identical. Alternatively, the configuration of each elongate member of the plurality of elongate members is not identical.

In an embodiment, the plurality of elongate members comprise metal. In this way, the perimeter replication device may be made more resilient to damage. In some embodiments, the plurality of elongate members comprise a lightweight metal, such as aluminium. Alternatively or in addition, the plurality of elongate members may be made substantially from plastic. In this way, the weight of the perimeter replication device may be reduced. In some embodiments, the plurality of elongate members comprise steel. Other materials may be used.

The plurality of hinges may comprise aluminium.

According to a second aspect of the invention there is provided a perimeter replication method for replicating the perimeter of a door frame comprising; providing the perimeter replication device of the first aspect of the invention; abutting the perimeter replication device to the perimeter to be replicated; adjusting the adjustable frame to replicate the perimeter; and locking the locking unit of the perimeter replication device.

Preferably, the perimeter replication method comprises the step of ensuring the device is in an unlocked configuration. Preferably, the step of ensuring the device is in an unlocked configuration precedes the step of abutting the perimeter replication device to the perimeter to be replicated.

Preferably, the step of abutting the perimeter replication device to the perimeter to be replicated comprises aligning the perimeter replication device in the same plane as the frame to be abutted. Preferably, the step of abutting the perimeter replication device to the perimeter to be replicated comprises abutting the spacer members of the perimeter replication device to the perimeter of the frame to be replicated.

Preferably, the perimeter replication method comprises the step of removing the perimeter replication device from the frame to be replicated. Preferably, the perimeter replication method comprises the step of placing the perimeter replication device on a material to be cut. For example, the material to be cut may be a door blank or wooden board. Preferably, the perimeter replication method comprises the step of marking the perimeter of the perimeter replication device onto the material to be cut. Preferably, the perimeter replication method comprises the step of cutting the material to be cut to the marked perimeter.

### Detailed Description

Embodiments of the present invention will now be described by way of example only and with reference to the accompanying drawings, in which:
Figures 1A and 1B depict a perimeter replication device in accordance with the first aspect of the present invention, the perimeter replication device shown in a maximum telescopically extended configuration;
Figures 2A and 2B depict perimeter replication device of Figure 1 in an unextended configuration;
Figure 3A depicts a hinge of the perimeter replication device of Figure 1;
Figure 3B depicts an exploded view of the hinge of the perimeter replication device of Figure 1;
Figure 4A depicts an internal view of the elongate member locking mechanism of the perimeter replication device of Figure 1;
Figure 4B depicts an exploded view of the elongate member locking mechanism of the perimeter replication device of Figure 1; and
Figure 5 discloses a perimeter replication method according to the second aspect of the invention.

While the embodiment described herein relates to a perimeter measuring device for a door frame, it is understood that the perimeter replication device of the present invention has further applications than that of the embodiment below. For example, the device may be used for other recesses and apertures requiring a door-like structure to be fitted to them, such as window frames and cupboards, or to picture frames which require a photograph or artwork to be cut to size.

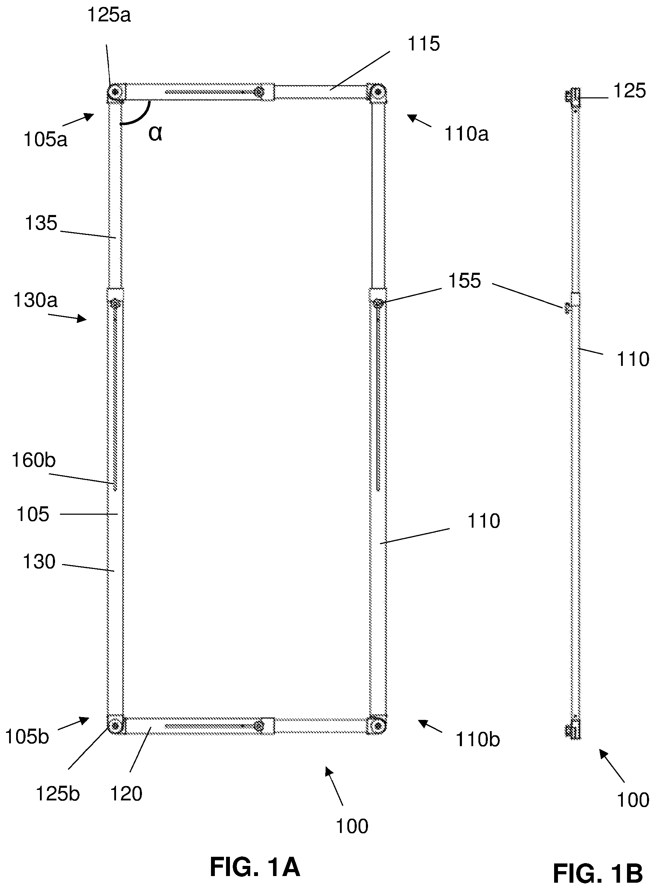

With reference to Figures 1 to 4, there is illustrated a perimeter replication device 100 for a door frame. The device 100 comprises an adjustable frame comprising four independently telescopic elongate members 105, 110, 115, 120 and four hinges 125 connecting each of the four elongate members 105, 110, 115, 120. The plurality of elongate members 105, 110, 115, 120 comprises a first longitudinal member 105 positioned opposite an identical second longitudinal member 110 and a first lateral member 115 positioned opposite an identical second lateral member 120.

The first longitudinal member 105 is coupled at a first end 105a to a first end 110a of the second longitudinal member 110 via the first lateral member 115. The first longitudinal member 105 is coupled at a second end 105b to a second end 110b of the second longitudinal member 110 via the second lateral member 120. The first longitudinal member 105 is connected at its first end 105a to a first hinge 125a and at its second end 105b to a second hinge 125b such that the adjustable frame is a continuous structure. The configuration of the first longitudinal member 105 will be described herein. It is understood that the configuration of the first longitudinal member 105, second longitudinal member 110, first lateral member 115 and second lateral member 120 are identical.

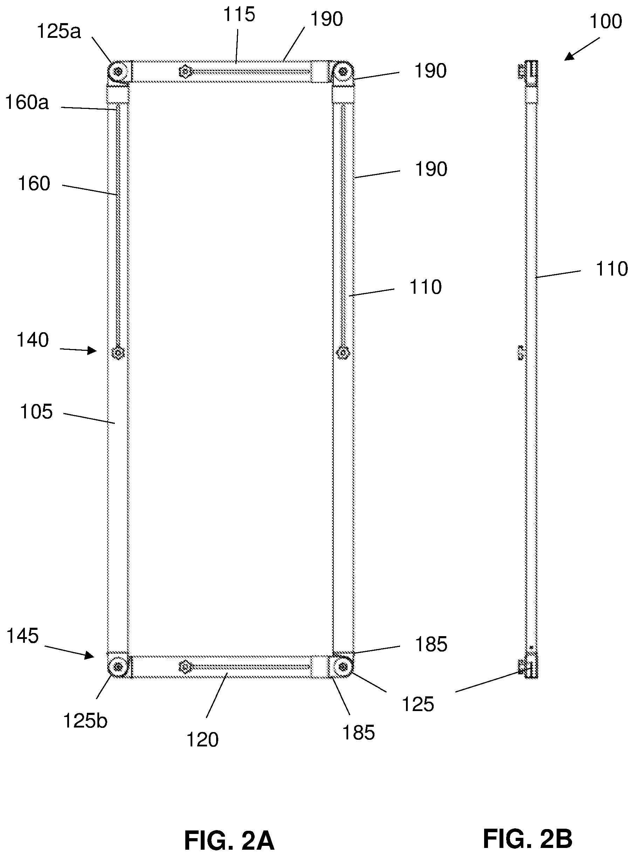

The first longitudinal member 105 comprises an internal member 135 located within an external member 130. As illustrated in Figure 1, the internal member 135 is configured to extend from a first end 130a of the external member 130 between a maximum telescopically extended configuration, shown in Figure 1, and an unextended configuration, shown in Figure 2. The internal member 135 and the external member 130 cooperate such that the internal member 135 cannot be accidently removed from the external member 130 when the first longitudinal member 105 is in the maximum telescopically extended configuration. As such, at least a portion of the internal member 135 remains located within the external member 130 when the first longitudinal member 105 is in the maximum telescopically extended configuration.

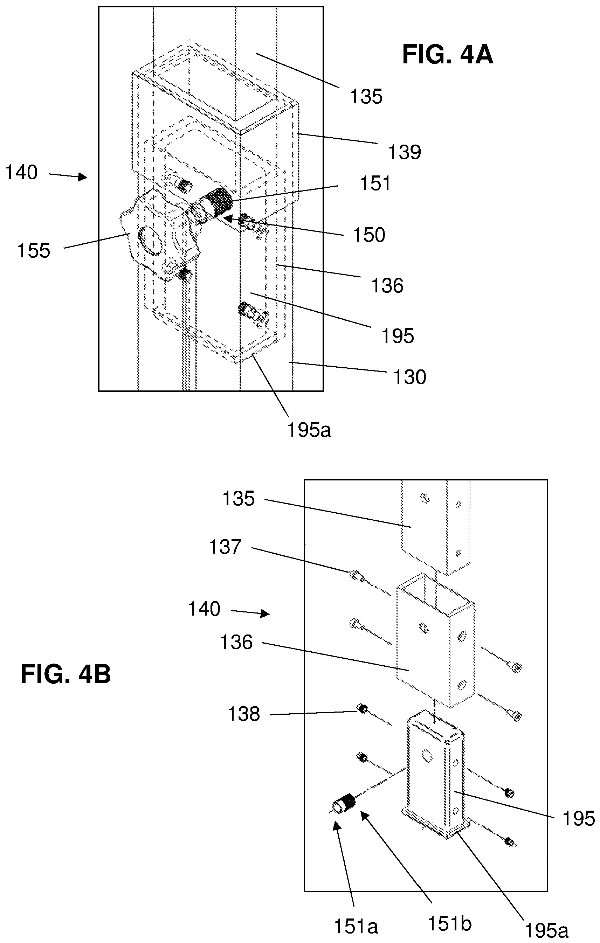

The first longitudinal member 105 comprises an internal spacer 195 (shown in Figure 4A) located within the external member 130 which is configured such that the internal member 135 remains concentrically located within the external member 130 during telescopic extension and contraction, ensuring a smooth telescopic motion.

The internal spacer 195 comprises a rectangular block configured to be housed with a transition fit within the internal member 135. In this way, the internal member 135 cannot move relative to the internal spacer 195. The internal spacer 195 further comprises an abutting portion 195a comprising a raised edge upstanding from the internal spacer 195 and located continuously about the perimeter of the internal spacer 195.

The first longitudinal member 105 comprises an internal strut collar 136 configured to partially encase the internal member 135 and abut the abutting portion 195a when the internal spacer 195 is located within the internal strut collar 136. In this way, the internal spacer 195 prevents motion of the intemal member 135 relative to the internal strut collar 136 when the internal spacer 195 and internal member 135 are located within the internal strut collar 136. The intemal strut collar 136 can be fixed to the internal member 135 and the internal spacer 195 via four bolts 137 located within the internal member 135, perpendicular to the surfaces of the internal member 135, and four complimentary threaded side inserts 138 located within the internal spacer 195, perpendicular to the surfaces of the internal spacer 195. The threaded side inserts 138 have an interference fit within the internal spacer 195. The bolts 137 can be screwed onto the threaded side inserts 138 to fix the internal strut collar 136 to the internal member 135 and the internal spacer 195. A pair of bolts 317 and a pair of threaded side inserts 138 are each located on opposing sides of the internal spacer 195. The 'side' of threaded side inserts 138 refers to the location of the threaded insert and not the location of the thread of the threaded insert.

The internal strut collar 136 itself acts as a spacer between internal member 135 and external member 130, when the internal member 135 and internal strut collar 136 are located within the external member 130. The internal strut collar 136 aids in ensuring the internal member 135 remains concentrically located within the external member 130 during telescopic extension and contraction, ensuring a smooth telescopic motion. The internal strut collar 136 is further advantageous in reducing the friction between internal member 135 and external member 130.

The first longitudinal member 105 further comprises an external strut collar 139 configured to house a portion of the first end 130a of the external member 130. The external member 130 is housed within the external strut collar 139 with an interference fit, such that the external member is fixed to the external strut collar 139. The external strut collar 139 further houses the internal member and allows the internal member 135 to slide within the external member 130. In a similar manner to the internal strut collar 136, the external strut collar 139 aids the internal member 135 in remaining concentrically located within the external member 130 during telescopic extension and contraction and reduces friction between internal member 135 and external member 130.

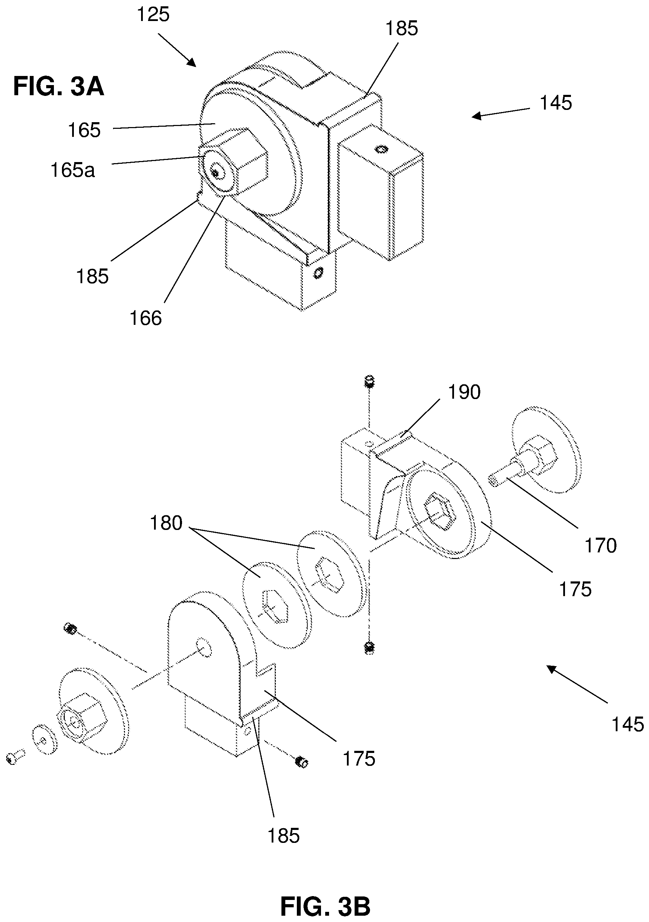

The device 100 further comprises a locking unit comprising an elongate member locking mechanism 140 (see Figure 4A) and a hinge locking mechanism 145 (see Figures 3A, 3B). The locking unit is configured to lock the adjustable frame in a locked configuration. The elongate member locking mechanism 140 comprises four elongate member locks, one elongate member lock located on each of the four elongate members and configured to lock the position of the external member 130 relative to the internal member 135. Each elongate member lock is configured to be operated independently of every other elongate member lock. The hinge locking mechanism 145 comprises four hinge locks, one hinge lock located on each of the four hinges. Each hinge lock is configured to be operated independently of every other hinge lock. The hinge lock located on the first hinge 125a is configured to lock the first longitudinal member 105 and the first lateral member 115 at an angle α, as illustrated on Figure 1a. Adjacent pairs of elongate members are configured to be locked in a similar manner. It is understood that angle α may be any angle between a minimum angle of 0 degrees and a maximum angle of 180 degrees.

When all four hinge locking mechanisms 145 and all four elongate member locking mechanisms 140 are locked, the adjustable frame is in a locked configuration. When one or more of the hinge locking mechanisms 145 and/or the elongate member locking mechanisms 140 is unlocked, the adjustable frame is in a partially locked configuration. When all four hinge locking mechanisms 145 and all four elongate member locking mechanisms 140 are unlocked, the adjustable frame is in an unlocked configuration.

The elongate member locking mechanism 140 is configured to lock each elongate member in substantially every position between an unextended configuration and a telescopically extended configuration. The elongate member locking mechanism 140 comprises a frictional blocking member 150 configured to releasably retain the internal member 135 in a position relative to the external member 130. The frictional blocking member 150 comprises a threaded insert 151 and a rotating handle 155, the handle 155 being coupled to a first end 151a of the threaded insert 151. The threaded insert 151 comprises a threaded internal diameter and the handle 155 comprises a bolt with a complimentary thread to the threaded internal diameter of the threaded insert 151. The bolt of the handle 155 is configured to screw onto the first end 151a of the threaded insert 151. The user can lock and unlock the elongate member locking mechanism 140 via the handle 155, the handle 155 being scalloped to improve user grip.

The threaded insert 151 further comprises a diamond knurled outer diameter and is configured to fit with an interference fit within an aperture of the internal member 135 and be partially embedded into the internal spacer 195 at the second end 151b of the threaded insert 151. In this way, the second end 151b of the threaded insert 151 can be fixed to the internal spacer 195, with the threaded insert 151 partially located within the internal member 135.

The handle 155 can be tightened on the threaded insert 151 so that the handle 155 abuts the external member 130, providing a force forcing the external member 130 towards the internal strut collar 136, internal member 135 and the internal spacer 195. As the threaded insert 151 is fixed at its first end 151a to the handle 155 and at its second end 151b to the internal spacer 195, tightening of the handle 155 on the threaded insert 151 brings the handle 155, external member 130, internal strut collar 136, internal member 135 and internal spacer 195 closer together such that they abut one another. The force provided by the tightened handle 155 increases the friction between the external member 130 and internal member 135, via the internal strut collar 136 and internal spacer 195, thereby reducing the ease of motion between the external member 130 and internal member 135.

The elongate member locking mechanism 140 can be assembled as follows. The four threaded side inserts 138 and the second end 151b of the threaded insert 151 can be embedded into the apertures provided in the internal spacer 195. The internal spacer 195 can then be inserted into the internal member 135. The internal spacer 195 and internal member 135 sub-assembly can then be inserted into the internal strut collar 136. The bolts 137 can be inserted into the internal strut collar 136 and coupled to the four threaded side inserts 138 to fix the internal strut collar 136 to the internal spacer 195. The internal member 135 sub-assembly can then be inserted into the external strut collar 139 and the external member 130.

The external member 130 comprises an elongate slot 160 extending from a first end 160a to a second end 160b. The slot 160 extends a distance equal to the location of the threaded insert 151 when the internal member 135 is located in the unextended configuration within the external member 130, with the first end 160a proximal the first lateral member 115 and the second end proximal the second lateral member 120. In this way, the internal member 135 can be housed within the slot 160 without prevention of motion of the threaded insert 151 by the second end 160b of the slot 160. The threaded insert 151 abuts the second end 160b of the slot 160 in the unextended configuration, preventing motion of the internal member 135 further into the external member 130 and beyond the unextended configuration.

The slot 160 is substantially straight and parallel to the direction of motion of the internal member 135 within the external member 130. The threaded insert 151 is upstanding at substantially a right angle from the internal member 135 and protrudes through the slot 160 such that the first end 151a of the threaded insert 151 protrudes from the slot 160. The first end 151a of the threaded insert 151 remains protruding from the slot 160 throughout telescopic extension and contraction of the elongate member. The handle 155 is attached to the first end 151a of the threaded insert 151 such that the external member 130 is located between the internal member 135 and the handle 155.

As such, the user can tighten the handle 155 on the threaded insert 151 to lock and unlock the elongate member locking mechanism 140. The force introduced by the tightening of the handle 155 on the threaded insert 151 urges the intemal member 135 into a non-concentric position within the external member 130, causing friction between the abutting surfaces of the intemal spacer 195, internal member 135, the internal strut collar 136 and the external member 130. The frictional force assists in preventing motion of the internal member 135 relative to the external member 130. When the handle 155 is untightened on the threaded insert 151, the force is removed, allowing motion of the internal member 135 relative to the external member 130. As such, the user can easily engage and disengage the elongate member locking mechanism 140 via the handle 155.

The threaded insert 151 is accommodated in the slot 160 with a clearance fit and the slot 160 has a substantially constant width along its length. As such, when the elongate member locking mechanism 140 is in an unlocked configuration, the threaded insert 151 can move along the slot 160 with ease.

The slot 160 is a closed aperture within the external member 135 and extends from first end 130a of the external member 130. The threaded insert 151 moves substantially along the entire length of the slot 160 when the elongate member is moved from the unextended configuration to the maximum telescopically extended configuration, and vice versa. Namely, when the elongate member is in the unextended configuration of Figure 2, the elongate member locking mechanism 140 is located at the first end 160a of the slot 160. When the elongate member is in the maximum telescopically extended configuration of Figure 1, the elongate member locking mechanism 140 is located at the second end 160b of the slot 160.

The hinge locking mechanism 145 comprises a handle 165 comprising a turning member 165a upstanding from the handle 165. The turning member 165a has an external tool cooperating portion formed of a hexagonal member 166 which is configured to be turned by a wrench, namely a spanner. The user can tighten and loosen the turning member 165a using a wrench to lock and unlock the hinge locking mechanism 145.

The hinge locking mechanism 145 comprises a screw 170 located within an aperture of two body portions 175 of the hinge 125. The two body portions 175 are configured to move independently to one another. The axis of rotation of the two body portions 175 of the hinge is the longitudinal axis of the screw 170. A pair of plates 180 are located between each body portion 175 to reduce wear on the body portions 175. The turning member 165a is located at an end of the screw 170 and by tightening the turning member 165a on the screw, the force parallel to the direction of the axis of rotation of the two body portions 175 increases, holding the two body portions 175 together. The frictional forces between the plates 180 increases when the turning member 165a is tightened, which increases the difficulty with which the body portions 175 can rotate relative to one another. The wrench aids the user in applying torque to the turning member 165a to exert the appropriate level of axial force on the plates 180 to lock them in place relative to one another.

The turning member 165a can be turned relative to the screw 170 regardless of the angle α between the adjacent elongate members made by the hinge 125. As such, the user can lock the hinge 125 at any required angle. Once locked, the hinge locking mechanism 145 applies a load of roughly 1250 kg to the plates 180 ensuring the hinge 125 will not move unintentionally, such as when force is accidentally applied to the adjustable frame. In this way, the adjustable frame will remain in the locked position into which it has been adjusted. When the tuming member 165a is loosened, the axial load between the plates 180 is removed and the body portions 175 of the hinge 125 are once again able to rotate relative to one another.

To be configured to lock at any angle between the minimum angle and the maximum angle, the hinges 125 may at least partly utilize the friction between the two plates 180 when they are pressed together in the locked configuration. In an embodiment, the friction is adequate to counteract reasonable torque applied to the hinge 125 via the elongate members of the adjustable frame during use, such as the user holding the device 100 against a door frame or due to the weight of the device 100 and the gravitational forces as the user lifts the device 100. To increase the torque required to move the hinges 125, and therefore the force required to change the angle between adjacent elongate members 105, 110, 115, 120, once the hinge mechanism is in the locked configuration, the friction between the two plates 180 should counteract a force applied by the user to the adjustable frame, for example during the maximum telescopically extended configuration.

The frictional force can be calculated using Fᵣ,= µN, where Fᵣ is the frictional force, µ is the coefficient of friction between the two plates 180 and N is the axial force holding the plates 180 together. The coefficient of friction is dependent on the materials of the plates 180. By increasing the coefficient of friction, the frictional force provided is increased. In this embodiment, the plates 180 are aluminium with a coefficient of friction of 1.05 and the axial force N is dependent on the force applied by the user to the turning member 165a with a wrench.

When the adjustable frame is in the maximum telescopically extended configuration, the distance between the first hinge 125a and the second hinge 125b is 2.1m. Applied torque, T_{applied}, can be calculated by multiplying the distance, d₁, between the two hinges 125a, 15b by the force applied perpendicular to this distance F_{applied}. In one example, when a user applies a 100N (≈10kg) load at the first hinge 125a, the applied torque, T_{applied}, experienced at the second hinge 125b is approximately 210 Nm.

The frictional torque T_{friction}, of the hinge 125 can be calculated by multiplying frictional force, Fᵣ, by the distance, d₂, of the frictional force from the pivot point of the hinge 125. in an embodiment, the outer radius of the plates 180 is 22.5mm and the inner radius is 9.65mm. When the plates 180 are pressed together, the frictional force will act in the mid radius between the inner and outer radii. The distance, d₂, of the frictional force from the pivot point is therefore taken as 16.075mm. The frictional torque, T_{friction}, is approximately 0.0169 N.

In an embodiment, if T_{friction}= T_{applied} = 210Nm, the axial force pressing the plates 180 together, N, can be calculated as 12500N which is approximately 1250kg of load. Therefore to provide an axial force which counteracts forces experienced by the elongate members 105, 110, 115, 120 during normal use, an axial force approximate to1250 kilograms of load forces the two plates 180 together.

The adjustable frame further comprises an extemal spacer unit located on a perimeter opposing face 190 of the adjustable frame. The spacer unit comprises eight spacer members 185, two spacer members 185 located on each hinge 125. Each spacer member 185 is upstanding from the perimeter opposing face 190 at a height approximately 2mm. The spacer members 185 are upstanding at right angles to their adjacent elongate members. Each spacer member 185 substantially forms a raised lip of the hinge 125, the spacer member 185 contacting each elongate member adjacent each respective hinge 125. In this way, the spacer member 185 contacts the perimeter of a door frame and there is an approximate 2mm clearance gap between each elongate member and the perimeter of the door frame. As such, when the adjustable frame is adjusted to abut the perimeter of a frame, a spacer member 185 located at substantially either end of each elongate member separates the elongate member from the perimeter of the frame by 2mm.

The hinges 125 are configured to allow the user to adjust the angle α between each adjacent elongate member 105, 110, 115, 120 between a minimum angle of 0 degrees and a maximum angle of 180 degrees. For example, the user can lock the first hinge 125a such that angle α is substantially any acute or obtuse angle, including at a right angle. In further embodiments of the device 100 of Figures 1 to 4, the hinges 125 are configured to allow the user to adjust the angle between each adjacent elongate member 105, 110, 115, 120 between a minimum angle of 10 degrees and a maximum angle of 170 degrees. However, it is understood that the angle between each adjacent elongate member is limited by the configuration of the adjustable frame at that instance, the number and location of the locked and unlocked locking mechanisms 140, 145 and/or the adjustable frame and the dimensions of the respective elongate members 105, 110, 115, 120.

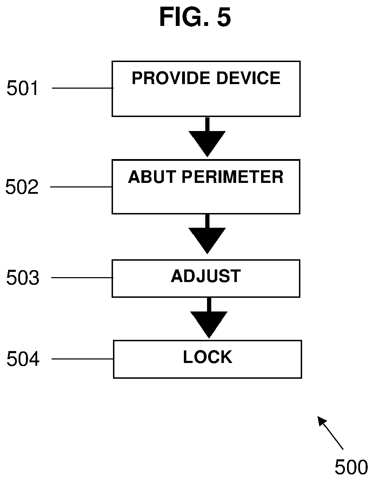

As illustrated in Figure 5, in a second aspect of the invention, there is provided a perimeter replication method 500 for replicating the perimeter of a door frame. The method 500 first comprises a PROVIDE DEVICE step 501, wherein the perimeter replication device 100 of the first aspect of the invention 501 is provided. There follows an ABUT PERIMETER step 502, wherein the user abuts the perimeter replication device 100 to the perimeter to be replicated. Next, the method 500 comprises an ADJUST step 503, wherein the adjustable frame of the device 100 is adjusted to replicate the perimeter of, for example, a door frame. There follows a LOCK step 504, wherein the user locks the locking unit of the device 100 such that the adjustable frame remains in the adjusted position when removed from the door frame ; and locking the locking unit of the device 100.

Additionally, prior to the ABUT PERIMETER step 502, the user can ensure the device 100 is in the unlocked configuration, namely all four hinge locks and all four elongate member locks are unlocked. Further, during the ABUT PERIMETER step 502 the user can align the device 100 in the same plane as the door frame to be abutted. The user can then adjust the adjustable to ensure the spacer members 185 abut the perimeter of the door frame. The user can independently rotate each hinge 125 and independently telescopically extend and contract each elongate member 105, 110, 115, 120 to replicate the perimeter of the door frame.

During the LOCK step 504, the user can, in tum, lock each elongate member lock by hand and lock each hinge lock using a wrench, such that the device 100 is in the locked configuration. Thereafter, the device 100 can then be removed from the door frame, either by pulling the device 100 towards or pushing the device 100 away from the user. The device 100 retains the adjusted shape created by the user replicating the door frame as it has been locked in position.

Next, the device 100 can be placed, for example, on a door blank, panel or board such that the device 100 can be used as a stencil. The user may align one of the elongate members against an edge of the door blank to reduce material wastage. The user can then draw around at least a portion of the perimeter opposing face 190 of the adjustable frame. The user is able cut the door blank to fit the door frame which the device 100 has replicated in a single replication and cutting step. The 2mm clearance gap is accommodated for in the replicated stencil produced on the door blank. Further, the user is not required to take any measurements of the frame nor lift the blank door to the frame to check the fit. The user is then able to fit hinges on the door blank and hang the door on the frame.

As illustrated in Figures 1B and 2B, the elongate members are rigid, substantially straight and have a substantially rectangular cross section. The width of each elongate member is greater than the depth, such that the perimeter opposing face 190 is narrower than its adjacent faces.

The first longitudinal member 105 and second longitudinal member 110 are 2100 mm in their maximum telescopically extended configuration and 1500 mm in their unextended configuration. The first lateral member 115 and second lateral member 120 are 900 mm in their maximum telescopically extended configuration and 600 mm in their unextended configuration. It is understood that the height of the spacer members 185 is not included in the length of the first longitudinal member 105, second longitudinal member 110, first lateral member 115 or second lateral member 120. As such, the total length of the longitudinal sides of the adjustable frame is 2104 mm in the maximum telescopically extended configuration and 1504 mm in the unextended configuration. The total length of the lateral sides of the adjustable frame is 904 mm in the maximum telescopically extended configuration and 604 mm in the unextended configuration.

The size of the stencil provided by the device 100 is equivalent to the lengths of the adjusted elongate members 105, 110, 115, 120, as the spacer members 185 provide the desired 2mm clearance gap on each side of the adjustable frame between the adjustable frame of the device 100 and the door frame to be replicated.

In this way, a perimeter replication device 100 is provided which improves the ease and time taken for a user to measure and fit doors, windows and the like to a frame, recess or aperture. A bespoke stencil is created which allows the user to easily replicate old frames, which may have bowed or become crooked or misshapen, and frames which unusual geometries which would prove otherwise difficult measure when using methods known in the art. Additionally, reduced physical labour is required as the user is not required to take any measurements of the frame nor lift the blank door to the frame to check the fit. The device 100 is also lightweight and portable and can be operated by a single user. Further, the user does not require any specialist skills to operate the device 100.

Other embodiments of the invention not described herein are envisaged. For example, it is understood that the overall dimensions of the adjustable frame in both the maximum telescopically extended configuration and the unextended configuration are dependent on the application of the device. For example, smaller dimensions than those described herein are appropriate for smaller apertures and frames, such as windows, and larger dimensions than those described herein are appropriate for larger apertures and frames, such as garage doors.

## Claims

1. A perimeter replication device (100) for a frame comprising:
an adjustable frame comprising;
a plurality of elongate members (105, 110, 115, 120); and
a plurality of hinges (125) connected to the plurality of elongate members (105, 110, 115, 120);
wherein each elongate member of the plurality of elongate members (105, 110, 115, 120) is connected at a first end (105a) to a first hinge (125a) of the plurality of hinges (125) and at a second end (105b) to a second hinge (125b) of the plurality of hinges (125) such that the adjustable frame is substantially a continuous structure;
wherein each elongate member of the plurality of elongate members (105, 110, 115, 120) is telescopic; and
wherein the perimeter replication device (100) further comprises a locking unit configured to lock the adjustable frame in a locked configuration, the locking unit comprising an elongate member locking mechanism (140), configured to lock each elongate member of the plurality of elongate members (105, 110, 115, 120) in any position between a telescopically unextended configuration and a maximum telescopically extended configuration, and a hinge locking mechanism (145), configured to lock each hinge of said plurality of hinges (125) in any position between a minimum position and a maximum position,
**characterised in that** the adjustable frame further comprises a spacer unit located on a perimeter opposing face (190) of the adjustable frame, and
wherein the spacer unit comprises a plurality of spacer members (185) located on the plurality of hinges (125).

2. The perimeter replication device (100) of claim 1, wherein the adjustable frame is a quadrilateral comprising a first longitudinal member (105) opposing a second longitudinal member (110) and a first lateral member (115) opposing a second lateral member (120).

3. The perimeter replication device (100) of claim 2, wherein the first longitudinal member (105) and second longitudinal member (110) are substantially identical and wherein the first lateral member (115) and second lateral member (120) are substantially identical.

4. The perimeter replication device (100) of claim 2 or claim 3, wherein the first longitudinal member (105) and second longitudinal member (110) are at least double the length of the first lateral member (115) and second lateral member (120).

5. The perimeter replication device (100) of any one preceding claim, wherein the plurality of elongate members (105, 110, 115, 120) are substantially straight.

6. The perimeter replication device (100) of any one preceding claim, wherein the elongate member locking mechanism (140) is configured to lock each elongate member of the plurality of elongate members (105, 110, 115, 120) in substantially every position between an unextended configuration and a telescopically extended configuration.

7. The perimeter replication device (100) of any one of claims 1 to 5, wherein the elongate member locking mechanism (140) is configured to lock each elongate member of the plurality of elongate members (105, 110, 115, 120) in a plurality of discrete locked configurations.

8. The perimeter replication device (100) of any one preceding claim, wherein the hinge locking mechanism (145) is configured to independently lock each hinge of the plurality of hinges in a locked configuration.

9. The perimeter replication device (100) of any one preceding claim, wherein the height of each spacer member (185) of the plurality of spacer members is approximately 2mm.

10. The perimeter replication device (100) of any one preceding claim, wherein the plurality of elongate members (105, 110, 115, 120) are independently telescopic.

11. The perimeter replication device (100) of any one preceding claim, wherein each elongate member of the plurality of elongate members (105, 110, 115, 120) comprises an external member (130) and an internal member (135), at least a portion of the internal member (135) located within the external member (130), the internal member (135) configured to extend from the external member (130) when the elongate member is in a telescopically extended configuration.

12. The perimeter replication device (100) of any one preceding claim, wherein each elongate member of the plurality of elongate members (105, 110, 115, 120) has a rectangular cross section.

13. A perimeter replication method (500) for replicating the perimeter of a frame comprising;
providing the perimeter replication device (100) of any one of claims 1 to 12;
abutting the perimeter replication device (100) to the perimeter to be replicated; adjusting the adjustable frame to replicate the perimeter; and
locking the locking unit of the perimeter replication device (100).

## Patentansprüche

1. Eine Vorrichtung (100) zum Nachbilden eines Umfangs für einen Rahmen, die Folgendes beinhaltet:
einen verstellbaren Rahmen, der Folgendes beinhaltet:
eine Vielzahl von länglichen Elementen (105, 110, 115, 120); und
eine Vielzahl von Scharnieren (125), die mit der Vielzahl von länglichen
Elementen (105, 110, 115, 120) verbunden sind;
wobei jedes längliche Element der Vielzahl von länglichen Elementen (105, 110, 115, 120) an einem ersten Ende (105a) mit einem ersten Scharnier (125a) der Vielzahl von Scharnieren (125) und an einem zweiten Ende (105b) mit einem zweiten Scharnier (125b) der Vielzahl von Scharnieren (125) verbunden ist, sodass der verstellbare Rahmen im Wesentlichen eine durchgehende Struktur ist;
wobei jedes längliche Element der Vielzahl von länglichen Elementen (105, 110, 115, 120) teleskopisch ist; und
wobei die Vorrichtung (100) zum Nachbilden eines Umfangs ferner eine Verriegelungseinheit beinhaltet, die konfiguriert ist, um den verstellbaren Rahmen in einer verriegelten Konfiguration zu verriegeln, wobei die Verriegelungseinheit einen Verriegelungsmechanismus (140) für längliche Elemente beinhaltet, der konfiguriert ist, um jedes längliche Element der Vielzahl von länglichen Elementen (105, 110, 115, 120) in einer beliebigen Position zwischen einer teleskopisch nicht ausgefahrenen Konfiguration und einer maximalen teleskopisch ausgefahrenen Konfiguration zu verriegeln, und einen Scharnierverriegelungsmechanismus (145), der konfiguriert ist, um jedes Scharnier der Vielzahl von Scharnieren (125) in einer beliebigen Position zwischen einer minimalen Position und einer maximalen Position zu verriegeln,
**dadurch gekennzeichnet, dass** der verstellbare Rahmen ferner eine Abstandshaltereinheit beinhaltet, die sich auf einer dem Umfang gegenüberliegenden Fläche (190) des verstellbaren Rahmens befindet, und
wobei die Abstandshaltereinheit eine Vielzahl von Abstandshalterelementen (185) beinhaltet, die sich auf der Vielzahl von Scharnieren (125) befinden.

2. Vorrichtung (100) zum Nachbilden eines Umfangs gemäß Anspruch 1, wobei der verstellbare Rahmen ein Viereck ist, das ein erstes Längselement (105), das einem zweiten Längselement (110) gegenüberliegt, und ein erstes seitliches Element (115), das einem zweiten seitlichen Element (120) gegenüberliegt, beinhaltet.

3. Vorrichtung (100) zum Nachbilden eines Umfangs gemäß Anspruch 2, wobei das erste Längselement (105) und das zweite Längselement (110) im Wesentlichen identisch sind und wobei das erste seitliche Element (115) und das zweite seitliche Element (120) im Wesentlichen identisch sind.

4. Vorrichtung (100) zum Nachbilden eines Umfangs gemäß Anspruch 2 oder Anspruch 3, wobei das erste Längselement (105) und das zweite Längselement (110) mindestens doppelt so lang sind wie das erste seitliche Element (115) und das zweite seitliche Element (120).

5. Vorrichtung (100) zum Nachbilden eines Umfangs gemäß einem der vorhergehenden Ansprüche, wobei die Vielzahl von länglichen Elementen (105, 110, 115, 120) im Wesentlichen gerade sind.

6. Vorrichtung (100) zum Nachbilden eines Umfangs gemäß einem der vorhergehenden Ansprüche, wobei der Verriegelungsmechanismus (140) für längliche Elemente konfiguriert ist, um jedes längliche Element der Vielzahl von länglichen Elementen (105, 110, 115, 120) in im Wesentlichen jeder Position zwischen einer nicht ausgefahrenen Konfiguration und einer teleskopisch ausgefahrenen Konfiguration zu verriegeln.

7. Vorrichtung (100) zum Nachbilden eines Umfangs gemäß einem der Ansprüche 1 bis 5, wobei der Verriegelungsmechanismus (140) für längliche Elemente konfiguriert ist, um jedes längliche Element der Vielzahl von länglichen Elementen (105, 110, 115, 120) in einer Vielzahl von diskreten verriegelten Konfigurationen zu verriegeln.

8. Vorrichtung (100) zum Nachbilden eines Umfangs gemäß einem der vorhergehenden Ansprüche, wobei der Scharnierverriegelungsmechanismus (145) konfiguriert ist, um jedes Scharnier der Vielzahl von Scharnieren unabhängig voneinander in einer verriegelten Konfiguration zu verriegeln.

9. Vorrichtung (100) zum Nachbilden eines Umfangs gemäß einem der vorhergehenden Ansprüche, wobei die Höhe jedes Abstandshalterelements (185) der Vielzahl von Abstandshalterelementen ungefähr 2 mm beträgt.

10. Vorrichtung (100) zum Nachbilden eines Umfangs gemäß einem der vorhergehenden Ansprüche, wobei die Vielzahl von länglichen Elementen (105, 110, 115, 120) unabhängig voneinander teleskopisch sind.

11. Vorrichtung (100) zum Nachbilden eines Umfangs gemäß einem der vorhergehenden Ansprüche, wobei jedes längliche Element der Vielzahl von länglichen Elementen (105, 110, 115, 120) ein externes Element (130) und ein internes Element (135) beinhaltet, wobei sich mindestens ein Abschnitt des internen Elements (135) innerhalb des externen Elements (130) befindet, wobei das interne Element (135) so konfiguriert ist, dass es aus dem externen Element (130) herausfahrbar ist, wenn sich das längliche Element in einer teleskopisch ausgefahrenen Konfiguration befindet.

12. Vorrichtung (100) zum Nachbilden eines Umfangs gemäß einem der vorhergehenden Ansprüche, wobei jedes längliche Element der Vielzahl von länglichen Elementen (105, 110, 115, 120) einen rechteckigen Querschnitt aufweist.

13. Verfahren zum Nachbilden eines Umfangs (500) zum Nachbilden des Umfangs eines Rahmens, das Folgendes beinhaltet: Bereitstellen der Vorrichtung (100) zum Nachbilden eines Umfangs gemäß einem der Ansprüche 1 bis 12; Anlegen der Vorrichtung (100) zum Nachbilden eines Umfangs an den nachzubildenden Umfang; Verstellen des verstellbaren Rahmens, um den Umfang nachzubilden; und Verriegeln der Verriegelungseinheit der Vorrichtung (100) zum Nachbilden eines Umfangs.

## Revendications

1. Un dispositif de réplication de périmètre (100) pour un cadre comprenant :
un cadre ajustable comprenant :
une pluralité d'éléments allongés (105, 110, 115, 120) ; et
une pluralité de charnières (125) raccordées à la pluralité d'éléments
allongés (105, 110, 115, 120) ;
dans lequel chaque élément allongé de la pluralité d'éléments allongés (105, 110, 115, 120) est raccordé au niveau d'une première extrémité (105a) à une première charnière (125a) de la pluralité de charnières (125) et au niveau d'une deuxième extrémité (105b) à une deuxième charnière (125b) de la pluralité de charnières (125) de sorte que le cadre ajustable est substantiellement une structure continue ;
dans lequel chaque élément allongé de la pluralité d'éléments allongés (105, 110, 115, 120) est télescopique ; et
dans lequel le dispositif de réplication de périmètre (100) comprend en outre un bloc de verrouillage configuré pour verrouiller le cadre ajustable dans une configuration verrouillée, le bloc de verrouillage comprenant un mécanisme de verrouillage d'élément allongé (140), configuré pour verrouiller chaque élément allongé de la pluralité d'éléments allongés (105, 110, 115, 120) dans n'importe quelle position entre une configuration de non-extension télescopique et une configuration d'extension télescopique maximale, et un mécanisme de verrouillage de charnière (145), configuré pour verrouiller chaque charnière de ladite pluralité de charnières (125) dans n'importe quelle position entre une position minimale et une position maximale,
**caractérisé en ce que** le cadre ajustable comprend en outre un bloc espaceur situé sur une face opposée au périmètre (190) du cadre ajustable, et
dans lequel le bloc espaceur comprend une pluralité d'éléments espaceurs (185) situés sur la pluralité de charnières (125).

2. Le dispositif de réplication de périmètre (100) de la revendication 1, dans lequel le cadre ajustable est un quadrilatère comprenant un premier élément longitudinal (105) opposé à un deuxième élément longitudinal (110) et un premier élément latéral (115) opposé à un deuxième élément latéral (120).

3. Le dispositif de réplication de périmètre (100) de la revendication 2, dans lequel le premier élément longitudinal (105) et le deuxième élément longitudinal (110) sont substantiellement identiques et dans lequel le premier élément latéral (115) et le deuxième élément latéral (120) sont substantiellement identiques.

4. Le dispositif de réplication de périmètre (100) de la revendication 2 ou de la revendication 3, dans lequel le premier élément longitudinal (105) et le deuxième élément longitudinal (110) font au moins deux fois la longueur du premier élément latéral (115) et du deuxième élément latéral (120).

5. Le dispositif de réplication de périmètre (100) d'une quelconque revendication précédente, dans lequel la pluralité d'éléments allongés (105, 110, 115, 120) sont substantiellement droits.

6. Le dispositif de réplication de périmètre (100) d'une quelconque revendication précédente, dans lequel le mécanisme de verrouillage d'élément allongé (140) est configuré pour verrouiller chaque élément allongé de la pluralité d'éléments allongés (105, 110, 115, 120) dans substantiellement toute position entre une configuration de non-extension et une configuration d'extension télescopique.

7. Le dispositif de réplication de périmètre (100) de l'une quelconque des revendications 1 à 5, dans lequel le mécanisme de verrouillage d'élément allongé (140) est configuré pour verrouiller chaque élément allongé de la pluralité d'éléments allongés (105, 110, 115, 120) dans une pluralité de configurations verrouillées discrètes.

8. Le dispositif de réplication de périmètre (100) d'une quelconque revendication précédente, dans lequel le mécanisme de verrouillage de charnière (145) est configuré pour verrouiller indépendamment chaque charnière de la pluralité de charnières dans une configuration verrouillée.

9. Le dispositif de réplication de périmètre (100) d'une quelconque revendication précédente, dans lequel la hauteur de chaque élément espaceur (185) de la pluralité d'éléments espaceurs est d'approximativement 2 mm.

10. Le dispositif de réplication de périmètre (100) d'une quelconque revendication précédente, dans lequel la pluralité d'éléments allongés (105, 110, 115, 120) sont indépendamment télescopiques.

11. Le dispositif de réplication de périmètre (100) d'une quelconque revendication précédente, dans lequel chaque élément allongé de la pluralité d'éléments allongés (105, 110, 115, 120) comprend un élément externe (130) et un élément interne (135), au moins une portion de l'élément interne (135) étant située au sein de l'élément externe (130), l'élément interne (135) étant configuré pour s'étendre depuis l'élément externe (130) lorsque l'élément allongé est dans une configuration d'extension télescopique.

12. Le dispositif de réplication de périmètre (100) d'une quelconque revendication précédente, dans lequel chaque élément allongé de la pluralité d'éléments allongés (105, 110, 115, 120) a une section transversale rectangulaire.

13. Un procédé de réplication de périmètre (500) pour répliquer le périmètre d'un cadre comprenant :
fournir le dispositif de réplication de périmètre (100) de l'une quelconque des revendications 1 à 12 ;
mettre en butée le dispositif de réplication de périmètre (100) contre le périmètre à répliquer ;
ajuster le cadre ajustable pour répliquer le périmètre ; et
verrouiller le bloc de verrouillage du dispositif de réplication de périmètre (100).
